Europäisches Patentamt

European Patent Office

Office européen des brevets

(11) Veröffentlichungsnummer: **0 232 799 B1**

(12) **EUROPÄISCHE PATENTSCHRIFT**

(45) Veröffentlichungstag der Patentschrift: **17.04.91**

(21) Anmeldenummer: **87101146.6**

(22) Anmeldetag: **28.01.87**

(51) Int. Cl.5: **F24C 7/08**, F24C 15/00, F16B 17/00

(54) **Befestigungsvorrichtung.**

(30) Priorität: **04.02.86 DE 3603270**
**03.05.86 DE 3615133**

(43) Veröffentlichungstag der Anmeldung:
**19.08.87 Patentblatt 87/34**

(45) Bekanntmachung des Hinweises auf die
Patenterteilung:
**17.04.91 Patentblatt 91/16**

(84) Benannte Vertragsstaaten:
**AT CH DE ES FR GB GR IT LI SE**

(56) Entgegenhaltungen:
**EP-A- 0 077 928**
**AT-B- 295 678**
**GB-A- 1 147 173**
**GB-B- 555 061**

(73) Patentinhaber: **E.G.O. Elektro-Geräte Blanc u.**
**Fischer**
**Rote-Tor-Strasse Postfach 11 80**
**W-7519 Oberderdingen(DE)**

(72) Erfinder: **Essig, Willi**
**Tribergstrasse 3**
**W-7030 Boeblingen(DE)**
Erfinder: **Kicherer, Robert**
**Amselrain 47**
**W-7519 Oberderdingen(DE)**
Erfinder: **Reimold, Guenther**
**Wolfsbergstrasse 3**
**W-7519 Eppingen-Muehlbach(DE)**

(74) Vertreter: **Patentanwälte Ruff und Beier**
**Neckarstrasse 50**
**W-7000 Stuttgart 1(DE)**

**Beschreibung**

Die Erfindung betrifft eine Befestigungsvorrichtung, insbesondere zur Befestigung von Leistungssteuergeräten oder dgl. an Elektrogeräten, wie Elektroherden, mit zwei aneinander zu befestigenden Verbindungsflanschen, die mindestens zwei im Abstand zueinander liegende Paare aus jeweils einer in Steckrichtung frei ausragenden Stecklasche und einer komplementären Stecköffnung aufweisen, wobei mindestens eine eng an die zugehörige Stecköffnung angepaßte Stecklasche als Schränkbiegelasche ausgebildet ist.

Zahlreiche, auf unterschiedlichsten Gebieten der Technik angewendete Befestigungsvorrichtungen weisen einen Befestigungsflansch mit stift- bzw. laschenförmig vorstehenden Befestigungsgliedern und einen komplementären Befestigungsflansch mit entsprechenden Stecköffnungen auf. Je nach Ausbildung der Befestigungsglieder kann es hierbei darauf ankommen, daß die zugehörigen Stecköffnungen sehr eng an die Steckglieder angepaßt sind, was das Zusammenführen der Befestigungsflansche, insbesondere wenn dies automatisiert erfolgen soll, erschwert. Dies ist besonders dann der Fall, wenn die Befestigungsglieder zungenförmige Laschen aus Blech oder dgl . sind, die sehr flache, jedoch verhältnismäßig langgestreckte längliche Querschnitte haben und daher an ihren Enden in Richtung rechtwinklig zu ihren langen Querschnittseiten durch Zuspitzung kaum wirkungsvoll so verjüngt werden können, daß eine selbstwirkende Einfädelung des Befestigungsgliedes in die Stecköffnung innerhalb brauchbarer Lageabweichungen zu erreichen ist. Z.B. zeigt die GB-B-555 061 eine solche Ausbildung.

Der Erfindung liegt die Aufgabe zugrunde, eine Befestigungsvorrichtung der genannten Art zu schaffen, welche es auch bei Stecklaschen oder dgl. mit geringem Querschnitt in wenigstens einer Richtung ermöglicht, wenigstens für eine dieser Stecklaschen eine sehr eng angepaßte Stecköffnung trotz leichter Einführbarkeit vorzusehen.

Zur Lösung dieser Aufgabe ist eine Befestigungsvorrichtung der genannten Art gemäß der Erfindung dadurch gekennzeichnet, daß im Querschnitt quer zur Steckrichtung mindestens zwei Stecklaschen zueinander etwa rechtwinkligen ersten und zweiten Koordinatenrichtungen zugeordnet sind, daß mindestens eine in der ersten Koordinatenrichtung liegende Stecklasche vor allen Stecklaschen der zweiten Koordinatenrichtung voreilend und dadurch zuvor in Steckeingriff in die zugehörige Stecköffnung kommend ausgebildet ist, daß jeder voreilenden Stecklasche eine gegenüber ihr für ein Justierspiel in der zweiten Koordinatenrichtung entsprechende weitere Stecköffnung zugeordnet ist, die in der ersten Koordinatenrichtung eng an sie angepaßt ist und daß an Seitenkanten jeder voreilenden Stecklasche als verjüngende Leitkanten zugeordnet sind. Z.B. können ihre Seitenkanten schräge oder abgerundete Leitkanten aufweisen.

Es sind also zwei Gruppen von jeweils mindestens einem Befestigungsglied vorgesehen, von denen die der ersten Gruppe nacheilend angeordnet sowie eng an die jeweils zugehörige Stecköffnung angepaßt sind, während die der zweiten Gruppe voreilend angeordnet sind, also vor denen der ersten Gruppe in Eingriff mit den zugehörigen Stecköffnungen kommen, wobei die Randbegrenzungen dieser Stecköffnungen und die zugehörigen Stecklaschen zur Ausrichtung in einer Koordinatenrichtung zusammenwirkende Leitflächen an der Stecklasche und/oder der Stecköffnung-Randbegrenzung haben, jedoch bei derjenigen Stecktiefe, bei welcher die Befestigungsglieder der ersten Gruppe in Eingriff mit der jeweils zugehörigen Stecköffnung kommen, noch ein für deren Ausrichtung in der anderen Koordinatenrichtung ausreichendes Bewegungsspiel gegenüber ihren Stecköffnungen in dieser Koordinatenrichtung aufweisen und hinsichtlich der ersten Koordinatenrichtung nur mit dem notwendigen Bewegungsspiel, also praktisch spielfrei geführt sind. Die beiden Koordinatenrichtungen liegen zweckmäßig rechtwinklig zueinander. Beim Zusammenführen der beiden Verbindungsflansche kommen daher zuerst die voreilenden Befestigungsglieder in Eingriff mit den zugehörigen Stecköffnungen und richten sich infolge der Leitkanten selbsttätig gegeneinander in Bezug auf die zuerst genannte Koordinatenrichtung aus, während sie in Bezug auf die andere Koordinatenrichtung innerhalb eines vorgegebenen Toleranzfeldes Lageabweichungen aufweisen können. Danach kommen die auf diese Weise hinsichtlich der ersten Koordinatenrichtung genau ausgerichteten Befestigungsglieder der zweiten Gruppe an ihren Stecköffnungen an und müssen gegenüber diesen lediglich noch hinsichtlich der anderen Koordiantenrichtung ausgerichtet werden, so daß ihre Stecköffnungen zumindest in Richtung der erstgenannten Koordinatenrichtung äußerst eng an sie angepaßt sein können. Ist auch eine enge Anpassung hinsichtlich der anderen Koordinatenrichtung erwünscht, so weisen die Stecköffnungen und die Befestigungsglieder der zweiten Gruppe hinsichtlich der anderen Koordinatenrichtung zusammenwirkende schräge oder abgerundete Leitflächen an den Befestigungsgliedern und/oder den Stecköffnung-Randbegrenzungen auf, so daß sich die Befestigungsglieder der zweiten Gruppe beim Einlaufen in ihre Stecköffnungen selbsttätig gegenüber diesen in der anderen Koordinatenrichtung ausrichten. Die Befestigungsglieder der zweiten Gruppe sind also diejenigen, welche für die gewünschte dauerhafte lagegenaue Ausrichtung der Verbindungsflansche gegeneinander sorgen, während die Befestigungsglieder der ersten Gruppe während der Montage vor allem Ausrichtfunktionen übernehmen, jedoch ebenfalls durch geeignete Maßnahmen, wie Verbiegen, zur späteren dauerhaften Verbindung der beiden Verbindungsflansche miteinander beitragen können. Im Falle der Ausbildung an den Stecklaschen sind also die Befestigungsglieder der ersten Gruppe als Schränkbiegelaschen vorgesehen, welche durch Verschränkung ihrer freien vorstehenden Enden gegenüber dem die zugehörige Stecköffnung aufweisenden Verbindungsflansch gesichert werden und im wesentlichen spielfrei in diesen eingreifen. Dadurch wird ein äußerst fester bzw. auch unter größeren Belastungen spielfreier Halt der beiden Verbindungsflansche aneinander gewährleistet und das Zusammenfügen der beiden Verbindungsflansche kann trotzdem automatisch, beispielsweise mit einem Handhabungsautomaten (Roboter), vorgenommen werden. Bei flachrechteckigem bzw. länglichem Querschnitt der Befestigungsglieder liegt zweckmäßig diejenige Koordinatenrichtung, in welcher das jeweilige Befestigungsglied selbstzentrierend wirkt, parallel zu seiner längeren Querschnittserstreckung.

Obwohl es denkbar ist, zwei oder mehr Stecklaschen der ersten und/oder der zweiten Gruppe in der zugehörigen Koordinatenrichtung, beispielsweise fluchtend, nebeneinander vorzusehen, ist es zur gleichmäßigen Lastverteilung zweckmäßig, wenn Stecklaschen der jeweiligen Gruppe quer bzw. rechtwinklig zu derjenigen Koordinatenrichtung, in welcher sie sich selbstzentrierend gegenüber den Stcköffnungen ausrichten, gegenüberliegen.

Es ist denkbar, die freien Enden der Stecklaschen um das genannte Voreilmaß gegeneinander versetzt vorzusehen. Besonders zweckmäßig ist es jedoch, wenn die Stecköffnungen um dieses Voreilmaß gegeneinander versetzt sind, so daß der die Stecköffnungen aufweisende Verbindungsflansch trotz Verwendbarkeit für gleiche Verbindungsflansche mit Stecklaschen unterschiedliche Dicke aufweisen kann, nämlich beispielsweise einerseits durch einen dünnwandig profilierten Bauteil aus Blech oder dgl. und andererseits durch eine dickwandigere Platte aus Kunststoff oder dgl. gebildet sein kann; der Bauteil bzw. die Platte kann gleichzeitig eine außenliegende Blende oder dgl. bilden, an deren Außenseite beispielsweise der oder die Bedienungsknöpfe für die an der Innenseite befestigten Geräte, wie Leistungssteuergeräte, liegen.

Insbesondere Befestigungsvorrichtungen, die starken Erschütterungen, Vibrationen und ähnlichen Belastungen ausgesetzt sind, können sich, gegebennenfalls auch erst nach sehr langer Gebrauchsdauer, so weit lösen, daß der befestigte Teil zwar noch ausreichend sicher gehalten, jedoch so locker ist, daß er nicht mehr spiel-und wackelfrei befestigt ist. Zur Lösung der Aufgabe, dies zu verhindern, wird insbesondere bei einer Befestigungsvorrichtung der beschriebenen Art, jedoch auch für Schränkbiegelaschen anderer Befestigungsvorrichtungen, erfindungsgemäß vorgeschlagen, der jeweiligen Schränkbiegelasche mindestens ein zusätzliches Sicherungsglied zuzuordnen, wobei dieses Sicherungsglied sich zweckmäßig nach Art einer Kralle in den anderen Verbindungsflansch bzw. den entsprechenden Gegenteil während des Schränkens geringfügig eindrückt und dadurch nicht nur bei auf die Befestigungsvorrichtung wirkenden Erschütterungen, sondern auch unter thermischen Ausdehungsbewegungen eine hohe Sicherheit gegen Lockerwerden der Befestigungsvorrichtung gewährleistet. Dieses Sicherungsglied, das auch durch eine entsprechende Ausprägung oder Einkerbung an der Anlagefläche des die Stecköffnung aufweisenden Verbindungsflansches gebildet sein kann, ist äußerst einfach in der Herstellung und sicher in der Wirkung, wenn es an der Schränkbiegelasche in Form einer sehr kleinen scharfkantigen Schulterfläche bzw. statt dessen oder zusätzlich hierzu durch eine spitze, ebenfalls scharfkantig begrenzte Ecke gebildet ist, wobei in jedem Fall eine Verkrallung des äußeren Endes der Schränkbiegelasche gegenüber der zugehörigen Anlagefläche erzielt wird. Im nichtgeschränkten Zustand liegt diese Schulterfläche unter einem kleinen, sich zu ihrem äußeren Ende öffnenden Winkel zur zugehörigen Anlagefläche des anderen Verbindungsflansches, jedoch wird beim Verschränken der Schränkbiegelasche dieser Winkel unter den auftretenden Verformungen im wesentlichen geschlossen, so daß sich mindestens eine, die Schulterfläche begrenzende Seitenkante bzw. mindestens eine die Eckkante der Ecke begrenzende, dreikantige Spitze, gegebenenfalls unter geringfügiger Eindrückung an die Anlagefläche anlegt. Diese Wirkung kann durch entsprechendes geringfügiges Schrägstellen der bereits geschränkten Schränkbiegelasche noch unterstützt werden.

Die erfindungsgemäße Befestigungsvorrichtung kann äußerst kostengünstig durch Stanzbiege- bzw. Stanzprägeteile gebildet sein, wobei zweckmäßig alle Stecklaschen einteilig mit einem Verbindungsflansch ausgebildet und alle Stecköffnungen im anderen Verbindungsflansch vorgesehen sind. Zweckmäßig sind die Stecklaschen an dem zu befestigenden Bauteil, also in der Regel an dem wesentlich kleineren Bauteil vorgesehen, der im Falle eines mit einem Elektrogerät zu verbindenden Leistungssteuergerätes durch letzteres gebildet ist. Mindestens ein Verbindungsflansch, insbesondere der diesem kleineren Bauteil zugehörige Verbindungsflansch weist zweckmäßig Befestigungsglieder für die Befestigung an diesem kleineren Bauteil auf, wobei dieses Befestigungsglieder in einfacher Weise durch Durchgangsbohrungen für Befestigungsschrauben, Niete oder ähnliche Befestigungsteile gebildet sein können.

Diese und weitere Merkmale von bevorzugten Weiterbildungen der Erfindung gehen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein können. Ein Ausführungsbeispiel der Erfindung ist in den Zeichnungen dargestellt und wird im folgenden näher erläutert. In den Zeichnungen zeigen:

Fig. 1    einen Ausschnitt einer erfindungsgemäßen, an einem Elektrogerät vorgesehenen Befestigungsvorrichtung in vereinfachter Darstellung,

Fig. 2    der dem Leistungssteuergerät gemäß Fig. 1 zugehörige Verbindungsflansch in perspektivischer Ansicht,

Fig. 3    die beiden aneinander befestigten Verbindungsflansche in Ansicht auf die Enden der Stecklaschen,

Fig. 4    die beiden Verbindungsflansche in einer Abwicklungs-Darstellung,

Fig. 5    einen Schnitt nach der Linie V-V in Fig. 3 in vergrößerter Darstellung,

Fig. 6    den dem zu befestigenden Teil zugehörigen Verbindungsflansch einer weiteren Ausführungsform in Ansicht,

Fig. 7    den Verbindungsflansch gemäß Fig. 6 in Ansicht von unter,

Fig. 8    den Verbindungsflansch gemäß Fig. 6 in Draufsicht,

Fig. 9    den Verbindungsflansch gemäß Fig. 6 in teilweise geschnittener Ansicht von rechts, jedoch um 90° verdreht dargestellt,

Fig. 10    einen Ausschnitt der Fig. 6 in vergrößerter Darstellung,

Fig. 11    einen Ausschnitt der Fig. 10 in vergrößerter Darstellung.

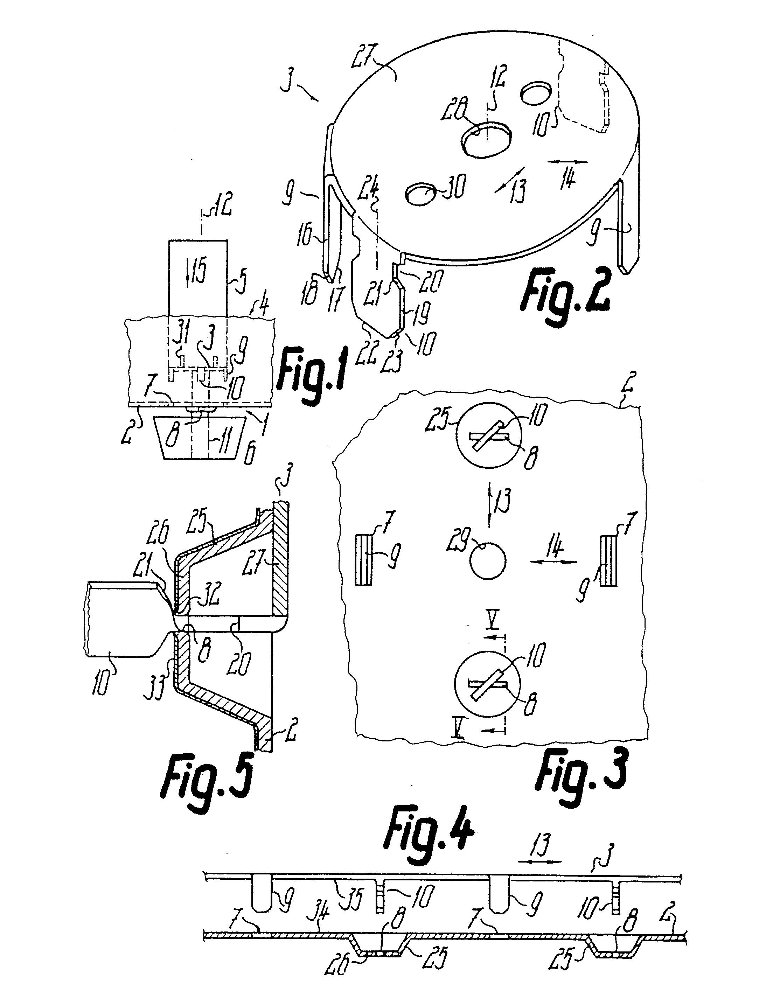

Die erfindungsgemäße, im wesentlichen durch zwei jeweils einteilige Verbindungsflansche 2,3 gebildete Befestigungsvorrichtung 1 ist gemäß Fig. 1 beispielsweise zur Befestigung eines Leistungssteuergerätes 5, wie eines Temperaturreglers, eines Schalters, aber auch einer Armatur, wie einer Anzeigevorrichtung oder dgl. an einem Baukörper, wie einem Elektrogerät 4, insbesondere einem Elektroherd, vorgesehen, von dem in Fig. 1 nur ein vorderer Ausschnitt der durch eine obere Gehäusewand gebildeten Herdmulde und der vorderen, durch den Verbindungsflansch 2 gebildeten Schalterblende dargestellt ist. Der Verbindungsflansch 2 bildet somit zweckmäßig das Gegenstück für zwei oder mehr nebeneinanderliegende Verbindungsflansche 3 bzw. Leistungssteuergeräte 5 oder dgl. Der Verbindungsflansch 2 weist für jeden Verbindungsflansch 3 mehrere Stecköffnungen 7,8 auf, die in Form und Lage an Stecklaschen 9,10 des Verbindungsflansches 3 angepaßt sind, wobei in Fig. 1 die Verbindungsflansche 2,3 in noch nicht vollständig zusammengefügtem, jedoch gegeneinander ausgerichtetem Zustand dargestellt sind. Der Verbindungsflansch 3 ist an dem dem Verbindungsflansch 2 zugekehrten Ende des aus Isolierwerkstoff bestehenden Gehäuses des Leistungssteuergerätes 5 befestigt und wird ebenso wie der Verbindungsflansch 2 von einer über dieses Ende vorstehenden Stellwelle 11 des Leistungssteuergerätes durchsetzt, die auf ihrem an der Außenseite des Verbindungsflansches 2 liegenden Ende eine beispielsweise durch einen Drehknopf gebildete Betätigungshandhabe 6 trägt. Die Stecköffnungen 7,8 und die nach der Befestigung über die Außenseite des Verbindungsflansches 2 vorstehenden Stecklaschen 9,10 liegen so eng beieinander, daß sie in Ansicht auf die Außenseite des Verbindungsflansches 2 vollständig von der bis nahe an diese Außenseite reichenden Betätigungshandhabe 6 überdeckt werden und daher nicht sichtbar sind.

Die Stecklaschen 9,10 sind ebenso wie die Stecköffnungen 7,8 mit etwa gleichen Radialabständen um eine zur Steckrichtung Pfeil 15 bzw. zu den Stecklaschen 9,10 parallele Mittelachse 12 gleichmäßig, also mit Bogenabständen von 90°, verteilt, wobei diese Mittelachse 12 gleichzeitig die Mittelachse des Leistungssteuergerätes 5 oder dgl. bzw. des Verbindungsflansches 3 ist. Um die Mittelachse 12 sind abwechselnd Stecklaschen 9 und Stecklaschen 10 vorgesehen, wobei jeweils zwei gleiche Stecklaschen 9 bzw. 10 einander diametral symmetrisch zu einer Axialebene der Mittelachse 12 gegenüberliegen, und hinsichtlich ihrer länglich rechteckien Flachquerschnitte rechtwinklig zu dieser Axialebene vorgesehen sind; parallel zu diesen beiden zueinander rechtwinkligen Axialebenen liegen auch zwei Koordinatenrichtungen 13,14, in welchen die Stecklaschen 9,10 der beiden unterschiedlichen Gruppen beim Einfahren in die zugehörigen Stecköffnungen jeweils selbstausrichtend wirken, wobei die Längserstreckung des Querschnittes jeder Stecklasche 9 bzw. 10 parallel zu derjenigen Koordinatenrichtung 13 bzw. 14 liegt, in welcher sie selbstausrichtend wirkt. Die Dicke aller Stecklaschen 9,10 kann etwa gleich sowie sehr gering sein und liegt beispielsweise in der Größenordnung von etwa 1 mm, vorzugsweise 0,8 mm. Die Längserstreckung des Querschnittes jeder Stecklasche 9 bzw. 10 ist demgegenüber mehrfach, beispielsweise mindestens 5-fach, größer und kann bevorzugt 5 mm betragen. Der Radialabstand der Stecklaschen bzw. Stecköffnungen von der Mittelachse 12 ist demgegenüber mehrfach größer, beispielsweise etwa 10-fach größer als die Längserstreckung des Querschnittes der Stecklaschen, so daß einander gegenüberliegende Stecklaschen beispielsweise einen Abstand von etwa 50 mm voneinander haben.

Die Stecklaschen 9 der ersten Gruppe dienen zweckmäßig ausschließlich als Führungs- und Ausrichtglieder, die den Verbindungsflansch 3 gegenüber dem Verbindungsflansch 2 in ihrer zugehörigen Koordinatenrichtung 13 ausrichten, jedoch in der anderen Koordinatenrichtung 14 gegenüber ihren Stecköffnungen 9 ein verhältnismäßig großes Bewegungsspiel haben, das je nach den Erfordernissen des beim Zusammenfügen verwendeten Handhabungsautomaten das höchstens Ein- bis mindestens Zweifache der Dicke der Stecklaschen beträgt, vorzugsweise etwa gleich deren Dicke ist und beispielsweise höchstens einem Fünftel der Breite der Stecklaschen 10 entspricht, so daß die Stecklaschen 9 aus einer Mittelstellung in beiden Richtungen der Koordiantenrichtung 14 etwa um die Hälfte ihrer Dicke bis zum Anschlag an den zugehörigen Längskanten ihrer Stecköffnungen 9 bewegt werden können. In ihrer Breitenrichtung bzw. in Richtung ihrer längeren Querschnittserstreckung, also in der Koordinatenrichtung 13, sind die Stecklaschen 9 eng an das zugehörige Maß der Stecköffnungen 9 angepaßt, derart, daß sie mit leichtem Schiebesitz und somit nahezu spielfrei zwischen den Schmalkanten der Stecköffnungen 9 gleichten können. Die Stecklaschen 9 weisen annähernd über ihre gesamte Länge parallele Schmalkanten 16 auf, die im Bereich der zur Steckrichtung Pfeil 15 rechtwinkligen Endkanten 17 in schräge oder abgerundete Leitkanten 18 derart übergehen, daß die Endkanten 17 gegenüber der übrigen Breite der Stecklaschen 9 kürzer sind, wobei die spiegelsymmetrisch an beiden Schmalkanten 16 vorgesehenen Leitkanten 18 an die Endkante 17 bevorzugt unter einem Winkel von etwa 135° oder weniger anschließen. Die Endkanten 17 sind zweckmäßig mindestens um dasjenige Maß gegenüber der übrigen Breite der Stecklaschen 9 kürzer, um welches die Stecköffnungen 7 gegenüber der Dicke breiter sind, sie sind also in ähnlicher Weise an die Arbeitstoleranzen des Handhabungsautomaten angepaßt.

Die Stecklaschen 10, die in der Koordinatenrichtung 14 selbstausrichtend wirken, sind, insbesondere ausschließlich, als Schränkbiegelaschen vorgesehen, die nach dem Zusammenstecken der beiden Verbindungsflansche 2,3 an ihren durchgesteckten Enden gegriffen und um eine in der Mitte ihrer Breite sowie ihrer Dicke liegende Achse gemäß Fig. 3 verdreht werden, derart, daß sie an der vom Verbindungsflansch 3 abgekehrten Außenseite des Verbindungsflansches 2 formschlüssig verspannt anliegen. Zu diesem Zweck weist jede Stecklasche 10 an ihren ansonsten annähernd über ihre gesamte übrige Länge parallelen sowie zur Steckrichtung Pfeil 15 parallelen Seitenkanten 19 Ausschnitte 20 auf, deren der zugehörigen Endkante 22 zugekehrte Seitenbegrenzung durch eine schräge Keilfläche 21 gebildet sit, die zur Längsmittelebene 24 der Stecklasche 10 unter einem sich zu deren freien Ende öffnenden spitzen Winkel liegt. Die Lage des äußeren Endes der Keilfläche 21 in Längsrichtung der Stecklasche 10 ist so gewählt, daß es bei in den Verbindungsflansch 2 gestecktem Verbindungsflansch 3 etwa in Höhe derjenigen Begrenzungskante der Längsbegrenzung der zugehörigen Stecköffnung 9 vorgesehen ist, welche an der vom Verbindungsflansch 3 abgekehrten Außenseite des Verbindungsflansches 2 liegt. Wird das Ende der Stecklasche 10 dann verschränkt, so laufen die beiden Keilflächen 21 an den einander gegenüberliegenden Längs-Begrenzungskanten der Stecköffnung 9 auf, so daß beim weiteren Verschränken durch die Keilwirkung der Keilflächen 21 der Verbindungsflansch 3 fest gegen die Innenseite des Verbindungsflansches 2 gezogen wird und sich eine hochfeste Verbindung ergibt. Die Seitenkanten 19 gehen über Leitkanten 23 in die Endkanten 22 über, wobei die Leitkanten 23 in ähnlicher Weise wie anhand der Leitkanten 18 beschrieben ausgebildet sein können. Die Breite der Stecklaschen 10 im Bereich der zueinander parallelen Seitenkanten 19 ist eng an den lichten Abstand zwischen den Schmalkanten der zugehörigen Stecköffnung 8, beispielsweise derart angepaßt, daß die Stecklasche 10 zwischen diesen Schmalkanten mit leichtem Schiebesitz geführt werden kann. Die Dicke der Stecklaschen 10 ist in ähnlicher Weise eng an den lichten Abstand zwischen den Längskanten der jeweiligen Stecköffnung 10 angepaßt. Anstatt die Leitkanten 18 und/oder 23 an den Stecklaschen vorzusehen, ist es bei ausreichend dicker Ausbildung des Verbindungsflansches 2 auch denkbar, im Bereich der Schmalkanten der zugehörigen Stecköffnungen an der dem Verbindungsflansch zugekehrten Seite des Verbindungsflansches 2 entsprechende schräge Einlaufflächen vorzusehen, wobei diese auch zusätzlich zu den schrägen Leitkanten 18 bzw. 23 angeordnet sein können. Die Stecköffnungen sind zweckmäßig von der dem Verbindungsflansch 3 zugekehrten Seite her in den Verbindungsflansch 2 gestanzt, so daß ihre an der Innenseite des Verbindungsflansches 2 liegenden Begrenzungskanten gemäß Fig. 5 im Querschnitt, beispielsweise annähernde viertelkreisförmig, abgerundet sind und daher die Stecklaschen besonders gut in die Stecköffnungen hineinfinden können.

Die Endkanten 17,22 aller Stecklaschen 9,10 liegen in einer gemeinsamen, zur Steckrichtung Pfeil 15 rechtwinkligen Ebene. Die ebenso wie die Stecköffnungen 7 in einer gemeinsamen Ebene liegenden Stecköffnungen 8 für die Stecklaschen 10 sind jedoch in Steckrichtung Pfeil 15 des Verbindungsflansches 3 gegenüber den Stecköffnungen 7 dadurch versetzt, daß sie jeweils in der zum übrigen plattenförmigen Verbindungsflansch 2 parallelen Bodenwand 26 einer napfförmigen Ausformung 25 dieses Verbindungsflansches 2 vorgesehen sind. Der Durchmesser der beispielsweise kegelstumpfförmigen Ausformung 25 ist zweckmäßig nur geringfügig größer als die Länge der Stecköffnung 8, wobei die Ausformung 25 so ausgebildet sein kann, daß der die Stecköffnung 8 aufnehmende Teil entgegen Steckrichtung mit steil ansteigender Federcharakteristik, d.h. auf einem extrem kleinen Federweg, federnd wirkt, so daß die Verbindungsflansche 2,3 nach dem Befestigen federnd gegeneinander gespannt sind und Dehnungen zwischen den Verbindungsflanschen federnd aufgefangen werden können, ohne zu einem Lockern der Verbindung zu führen. Durch die versetzten Stecköffnungen 8 greifen die Stecklaschen 10 beim Einstecken des Verbindungsflansches 3 in den Verbindungsflansch 2 nach den Stecklaschen 9 bzw. erst dann in die zugehörigen Stecköffnungen 8 ein, wenn die Leitkanten 18 bereits voll in die Stecköffnungen 9 eingelaufen sind und daher der Verbindungsflansch 3 in der zugehörigen Koordinatenrichtung 13 genau ausgerichtet ist. Anschließend an die Stecklaschen 9 erreichen die bereits in der Koordinatenrichtung 13 genau ausgerichteten Leitkanten 23 die Stecköffnungen 8, so daß im weiteren Verlauf der Verbindungsflansch 3 in der Koordinatenrichtung Pfeil 14 genau gegenüber dem Verbindungsflansch 2 ausgerichtet wird. Bei diesem Verfahren wird also durch die Verbindungsflansche 2,3 selbst unmittelbar während des Zusammenführens in Steckrichtung zunächst durch eine Gruppe von Stecklaschen 9 in einer Koordinatenrichtung Pfeil 13 und dann durch die andere Gruppe von Stecklaschen 10 in der anderen Koordinatenrichtung Pfeil 14 ausgerichtet, wobei die nacheilende Gruppe von Stecklaschen 10 hinsichtlich ihres in Befestigungsstellung in die zugehörigen Stecköffnungen 8 eingreifenden Querschnittes sehr eng bzw. im wesentlichen spielfrei an diese Stecköffnungen 8 angepaßt sein kann. Dies führt nach dem beschriebenen Verschränken der Stecklaschen 10 zu einer so sicheren Verbindung zwischen den Verbindungsflansche 2, 3, daß auch relativ hohe, beispielsweise auf das Leistungssteuergerät 5 wirkende, Biegemomente, wie sie beim anschließenden Verdrahten mit elektrischen Leitungen auftreten können, nicht zu einer Lockerung der Verbindung zwischen den Verbindungsflanschen 2,3 führen. Anstelle Steck- und Schränklaschen können nur Schränklaschen ausgebildet sein, wobei vorzugsweise das in einer Koordinatenrichtung zusammengehörige Laschenpaar gegenüber dem anderen zusammengehörigen Laschenpaar unterschiedliche Länge aufweist. Der Längenunterschied ist zweckmäßig gerade so groß, daß wahlweise zwei verschieden dicke Befestigungsflansche 2 ohne besondere napfartige Ausprägungen 25 oder dgl. verwendet werden können. Dadurch kann je nach Dikke des verwendeten Befestigungsflansches einmal das eine oder das andere Laschenpaar als Schränklasche verwendet werden.

Es sind auch Kombinationen denkbar, bei denen zum Beispiel mindestens eine Stecklasche am Befestigungsflansch 2 mindestens eine Schränklasche am Befestigungsflansch 3 bzw. mehrere oder alle Steck- und Befestigungslaschen am Befestigungsflansch 2 angebracht sind.

Die Stecklaschen 9,10 sind als gleich lange Randabwinkelungen einer ebenen Flanschplatte 27 ausgebildet, die im dargestellten Ausführungsbeispiel in Anpassung an das zugehörige Ende des Leistungssteuergerätes 5 oder dgl. kreisrund ist. Aus Gründen der Materialeinsparung können die Laschen auch aus dem innerhalb des Randes liegenden Material herausgezogen bzw. ausgestanzt und abgewinkelt sein. Die Flanschplatte 27 weist eine in der Mittelachse 12 liegende Durchgangsöffnung 28 für die Stellwelle 11 auf. Eine deckungsgleich zu dieser Durchgangsöffnung 28 vorgesehene Durchgangsöffnungen 29 ist auch im Verbindungsflansch 2 vorgesehen. Des weiteren weist die Flanschplatte 27 zwei beiderseits der Durchgangsöffnung 28 liegende Befestigungsglieder 30 in Form von Durchgangsbohrungen auf, die deckungsgleich zu Gewindebohrungen am vorderen Ende des Leistungssteuergerätes 5 oder dgl. vorgesehen sind, so daß der Verbindungsflansch 3 mit entsprechenden Schrauben an dem Leistungssteuergerät 5 befestigt werden kann. Die Gewindebohrungen können an den nach vorne abgekröpften Enden eines von der Stellwelle 11 durchsetzten Flachmaterialbügels vorgesehen sein, der am vorderen Ende des Gehäuses des Leistungssteuergerätes 5 befestigt ist und mit welchem dieses Leistungssteuergerät 5 auch unmittelbar durch von außen eingesetzte Schrauben an einem Verbindungsflansch befestigt werden kann.

Wie Fig. 5 zeigt, können die den Keilflächen 21 zugehörigen Begrenzungs-Kanten 32 an der Außenseite des Verbindungsflansches 2 bzw. der Bodenwand 26 der jeweiligen Ausformung 25 auch grat- bzw. schneidenartig nach außen vorstehen, was durch den beschriebenen Stanzvorgang gleichzeitig mit den abgerundeten inneren Begrenzungskanten in einfacher Weise dadurch bewirkt werden kann, daß zwischen Matrize und Patrize des Stanzwerkzeuges ein entsprechend großer Spaltabstand gelassen wird. Diese Kanten 32 stehen nach außen im wesentlichen über eine an der Außenseite des Verbindungsflansches 2 vorgesehene Schicht 33 aus Emaille oder dgl. vor, so daß diese Schicht im Bereich der Kanten 32 beim Verschränken der Stecklaschen 10 durch die Keilflächen 21 nicht verletzt werden bzw. absplittern kann.

Die einander zugekehrten Plattenflächen der Verbindungsflansche 2,3 bilden Gegendruckflächen 34,35, die bei aneinander befestigten Verbindungsflanschen unter dem über die verschränkten Stecklaschen 10 ausgeübten Druck aneinander anliegen. Im Bereich der Stecklaschen 9 reichen diese Gegendruckflächen 34,35 bis an deren hintere Enden, während sie im Bereich der Stecklaschen 10 nur bis in den Randbereich der Ausformungen 25 reichen, so daß auch die Flanschplatte 27 im Bereich der Stecklaschen 10 in der beschriebenen Weise geringfügig federnd verformt werden kann. Die Dikke des Verbindungsflansches 2 kann etwa in der Größenordnung der Dicke des Verbindungsflansches 3 liegen, ist bevorzugt mit beispielsweise etwa 0,6 mm jedoch geringfügig dünner als der Befestigungsflansch 3.

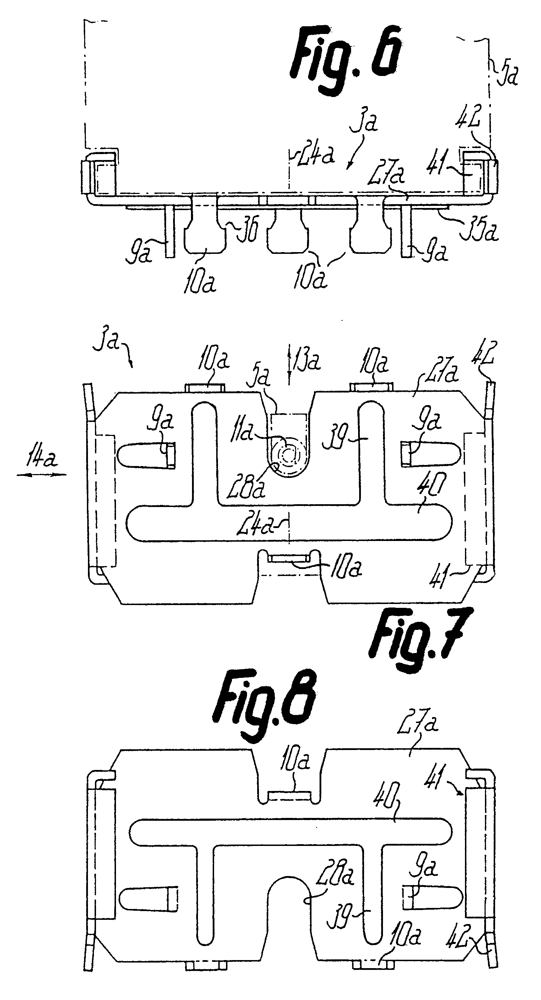

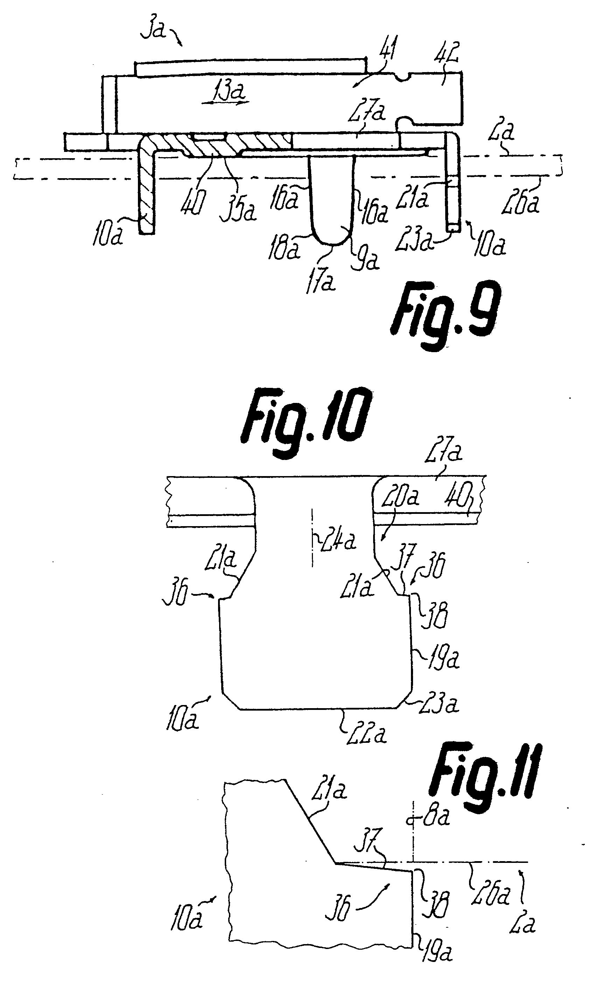

In den Fig. 6 bis 11 sind für einander entsprechende Teile die gleichen Bezugszeichen wie in den Fig. 1 bis 5, jedoch mit dem Index "a" verwendet. Der Verbindungsflansch 3a gemäß den Fig. 6 bis 11 weist drei an den Spitzen eines gedachten gleichseitigen oder gleichschenkligen Dreieckes sowie parallel zueinander liegende, im wesentlichen gleiche Schränkbiegelaschen 10a auf, wobei zwei Schränkbiegelaschen in einer gemeinsamen Ebene nebeneinander an einer länglichen Außenbegrenzung der im wesentlichen länglich rechteckigen Flanschplatte 27a vorgesehen sind, während die dritte Schränkbiegelasche 10a der gegenüberliegenden Außenbegrenzung zugeordnet, jedoch gegenüber dieser annähernd um soviel zurückversetzt ist, daß sie praktisch verschnittfrei ausgestanzt werden kann. In der Mittelebene zwischen den nebeneinanderliegenden Schränkbiegelaschen 10a, in welcher auch die gegenüberliegende Schränkbiegelasche 10a vorgesehen ist, ist in der Flanschplatte 27a die Durchgangsöffnung 28a für die Stellwelle 11a vorgesehen, wobei diese Durchgangsöffnung 28a zu der die beiden nebeneinanderliegenden Schränkbiegelaschen 10a aufweisenden Außenbegrenzung der Flanschplatte 27a offen und im Bereich dieser Außenbegrenzung trichterförmig erweitert, jedoch ansonsten im wesentlichen U-förmig begrenzt ist. Die Stecklaschen 9a liegen so vollständig innerhalb der Außenbegrenzungen der Flanschplatte 27a einerseits zwischen den beiden Ebenen, in welchen die Schränkbiegelaschen 10a vorgesehen sind und andererseits beiderseits der genannten Mittelebene, daß die zu ihrer Herstellung erforderlichen Stanzschnitte vollständig über den Umfang begrenzte Durchbrüche in der Flanschplatte 27a bilden. Diese Durchbrüche liegen nach dem Abwinkeln der Stecklaschen 9a an deren voneinander abgekehrten Außenseiten. Die Stecklaschen 9a sind zu ihren freien Enden über ihre gesamte Länge unter wenigen Winkelgraden in der Breite verjüngt und weisen eine teilkreisförmige, tangential in die Seitenkanten übergehende Endfläche 17a auf, deren seitliche, konvex gekrümmte Abschnitte die Leitkanten 18a bilden. In Ansicht auf die Ebenen der Schränkbiegelaschen 10a gemäß Fig. 6 liegen die beiden Stecklaschen 9a seitlich geringfügig außerhalb aller Schränkbiegelaschen 10a, wobei ihre Enden geringfügig weiter als diejenigen der Schränkbiegelaschen 10a vorstehen und dadurch zuerst in Eingriff mit den zugehörigen Stecköffnungen kommen. Die Endflächen 22a der Schränkbiegelaschen 10a liegen dabei in einer gemeinsamen Ebene, die etwa durch diejenige Zone der Stecklaschen 9a geht, in welchen deren Leitflächen 18a an die Seitenkanten 16a anschließen.

Die Ausschnitte 20a jeder Schränkbiegelasche 10a reichen von deren Übergang in die Flanschplatte 27a bis zum Schränkabschnitt, so daß also der innere Endabschnitt der Schränkbiegelasche über seine gesamte Länge schmaler als der durch das äußere Ende gebildete Schränkabschnitt ist und sich im wesentlichen eine T-Form der Schränkbiegelasche ergibt. An die unter einem spitzen Winkel zueinander liegenden beiden Keilflächen 21a jeder Schränkbiegelasche 10a schließt sich jeweils eine äußerst kurze, gegenüber der Dicke der Schränkbiegelasche 10a kürzere Schulterfläche 37 an, die über eine nahezu rechtwinklige Ecke 38 in die zugehörige Seitenkante 19a des Schränkabschnittes übergeht. Die Schulterfläche 37 liegt dabei unter einem sich zur Flanschplatte 3a öffnenden Winkel zur Längsmittelebene 24a, der um wenige, beispielsweise etwa fünf Winkelgrade größer als 90° ist, so daß die Schulterfläche 37 gemäß Fig. 11 bei unverschränkter Schränkbiegelasche 10a noch unter einem kleinen, sich zur Ecke 38 öffnenden Winkel entsprechender Größenordnung zur Anlagefläche 26a des anderen Verbindungsflansches 2a liegt. Durch das Verschränken der Schränkbiegelasche 10a verkürzt sich diese in ihrer Längsrichtung, wobei sich gleichzeitig die Schulterfläche 37 und gegebenenfalls die Ecke 38 benachbart zur Stecköffnung 8a in dem Verbindungsflansch 2a, insbesondere in der Anlagefläche 26a verkrallt. Dadurch sind an jeder Schränkbiegelasche 10a zwei zusätzliche Sicherungsglieder 36 gebildet, die ein Lockern der Befestigungsvorrichtung auch nach langer Gebrauchsdauer und unter extremen Belastungen verhindern.

Die Gegendruckfläche 35a des Verbindungsflansches 3a ist im dargestellten Ausführungsbeispiel wesentlich flächenkleiner als die zugehörige Gesamtfläche der Flanschplatte 27a, wobei sie ausschließlich mit Abstand innerhalb von deren Außenbegrenzungen liegt und sich im wesentlichen in Nähe des Teilkreises erstreckt, auf welchem sowohl die Schränkbiegelaschen 10a als auch die Stecklaschen 9a etwa um das innere Ende der Durchgangsöffnung 28a liegen. Die Gegendruckfläche 35a ist durch sickenförmige Ausprägungen bzw. Rippen 39,40 der Flanschplatte 27a gebildet, wobei diese Rippen 39,40 streifenförmig ebene, zusammenhängende Zonen der Gegendruckfläche 35a bilden. Die Rippen 39,40, von denen zwei rechtwinklig zur gemeinsamen Ebene der beiden nebeneinanderliegenden Schränkbiegelaschen 10a, symmetrisch zur Längsmittelebene jeweils einer dieser Schränkbiegelaschen 10a und mit ihren Enden nur in geringem Abstand von der jeweils zugehörigen Schränkbiegelasche 10a und damit beiderseits der Zugangsöffnung 28a liegen, bewirken außen einer genau definierten Gegendruckfläche 35a auch eine wesentliche Versteifung der Flanschplatte 27a in den besonders belasteten Bereichen. Die dritte, längste Rippe 40, in welche die beiden anderen Rippen 39 nach Art der Schenkel einer U-Form übergehen, liegt rechtwinklig zu den Rippen 39, reicht annähernd über die gesamte Länge der Flanschplatte 27a und ist derart zwischen den Stecklaschen 9a und der von den Rippen 39 abgekehrten, gegenüberliegenden Schränkbiegelasche 10a vorgesehen, daß sie verhältnismäßig nahe bei dieser liegt.

Die Flanschplatte 27a des Verbindungsflansches 3a ist zur unmittelbaren formschlüssigen Befestigung am Gehäuse des Leistungssteuergerätes 5a oder dgl. dadurch ausgebildet, daß sie an ihrer von den Schränkbiegelaschen 10a abgekehrten Seite mit entsprechenden, aus ihr herausgeformten Formschlußgliedern versehen ist, so daß zu ihrer Befestigung keine gesonderten Bolzen oder ähnliche Befestigungsmittel erforderlich sind. Die schmalen Außenränder der Flanschplatte 27a sind zu U-profilförmigen Steckprofilen 41 geformt, die jeweils am Ende von einem einwärts gebogenen Anschlaglappen begrenzt sind, während am anderen, dem offenen Ende der Durchgangsöffnung 28a zugehörigen Ende jeweils eine zunächst noch offene Biegelasche 42 in Fortsetzung des U-Quersteges vorgesehen ist, die nach dem Einsetzen des mit Eingriffsnuten für die freien Schenkel der Steckprofile 41 versehenen Leistungssteuergerätes 5a zu dessen Sicherung einwärts gebogen werden.

## Ansprüche

1. Befestigungsvorrichtung, insbesondere zur Befestigung von Leistungssteuergeräten (5) oder dgl. an Elektrogeräten, wie Elektroherden (4), mit zwei aneinander zu befestigenden Verbindungsflanschen (2, 3), die mindestens zwei im Abstand zueinander liegende Paare aus jeweils einer in Steckrichtung (Pfeil 15) frei ausragenden Stecklasche (9, 10) und einer komplementären Stecköffnung (7, 8) aufweisen, wobei mindestens eine eng an die zugehörige Stecköffnung (8) angepaßte Stecklasche (10) als Schränkbieggelasche ausgebildet ist, dadurch gekennzeichnet, daß im Querschnitt quer zur Steckrichtung (Pfeil 15) mindestens zwei Stecklaschen (9, 10) zueinander etwa rechtwinkligen ersten und zweiten Koordinatenrichtungen (Pfeile 13, 14) zugeordnet sind, daß mindestens eine in der ersten Koordinatenrichtung (Pfeil 13) liegende Stecklasche (9) vor allen Stecklaschen (10) der zweiten Koordinatenrichtung (Pfeil 14) voreilend und dadurch zuvor in Steckeingriff mit der zugehörigen Stecköffnung (7) kommend ausgebildet ist, daß jeder voreilenden Stecklasche (9) eine gegenüber ihr für ein Justierspiel in der zweiten Koordinatenrichtung (Pfeil 14) entsprechend weitere Stecköffnung (7) zugeordnet ist, die in der ersten Koordinatenrichtung (Pfeil 13) eng an sie angepaßt ist und daß den Seitenkanten jeder voreilenden Stecklasche (9) verjüngende Leitkanten (18) zugeordnet sind.

2. Befestigungsvorrichtung nach Anspruch 1, dadurch gekennzeichnet, daß jeder Koordinatenrichtung (Pfeile 13a, 14a) mindestens zwei , insbesondere in der anderen Koordinatenrichtung (Pfeile 14a, 13a) gegeneinander versetzte, Stecklaschen (9a, 10a) zugeordnet sind, wobei vorzugsweise von drei an den Ecken eines gedachten Dreieckes liegenden Schränkbiegelaschen (10a) zwei etwa in der zweiten Koordinatenrichtung (Pfeil 14a) nebeneinander liegend vorgesehen sind.

3. Befestigungsvorrichtung nach Anspruch 1 oder 2, dadurch gekennzeichnet, daß Stecklaschen (9) der einen Koordinatenrichtung (Pfeil 13) einander beiderseits der Stecklaschen (10) der anderen Koordinatenrichtung (Pfeil 14) gegenüberliegen und daß vorzugsweise alle Stecklaschen (9, 10) etwa auf einem gemeinsamen Teilkreis angeordnet und/oder etwa gleichmäßig verteilt sind.

4. Befestigungsvorrichtung nach einem der vorhergehenden Ansprüche, dadurch gekennzeichnet, daß alle Stecklaschen (9a, 10a) im wesentlichen in Steckrichtung (Pfeil 15a) gleich weit vorstehen, insbesondere etwa gleich lang sind, und daß die den voreilenden, insbesondere geringfügig längeren Stecklaschen (9a) zugehörigen Stecköffnungen (7a) in ihrer Steckrichtung etwa um das Voreilmaß gegenüber den anderen Stecköffnungen (8a) versetzt sind.

5. Befestigungsvorrichtung nach einem der vorhergehenden Ansprüche, dadurch gekennzeichnet, daß die voreilenden Stecklaschen (9) annähernd über ihre Stecklänge im wesentlichen konstante Breite aufweisen und daß vorzugsweise ausschließlich die nacheilenden Stecklaschen (10) als Schränkbiegelaschen vorgesehen sind, und, insbesondere an ihren Seitenkanten (19), von Keilflächen (21) begrenzte Ausschnitte (20) für den Eingriff in die gegenüberliegenden längeren Begrenzungs-Kanten (32) der jeweils zugehörigen Stecköffnung (8) aufweisen.

6. Befestigungsvorrichtung nach einem der vorhergehenden Ansprüche, dadurch gekennzeichnet, daß die jeweilige Schränkbiegelasche (10a) mindestens ein Sicherungsglied (36) für den Eingriff in die ihrem Ende (22a) zugehörige Seite des mit der Stecköffnung versehenen Verbindungsflansches (2a) aufweist, das vorzugsweise durch eine Schulterfläche (37) und/oder eine spitze Ecke (38) gebildet ist.

7. Befestigungsvorrichtung nach Anspruch 6, dadurch gekennzeichnet, daß die gegenüber der Dicke des Verbindungsflansches (2a,3a), insbesondere wesentlich, schmalere Schulterfläche (37) etwa parallel, insbesondere unter einem kleinen, sich zum äußeren Ende öffnenden Winkel, zur zugehörigen Anlagefläche (26a) des anderen Verbindungsflansches (2a) liegt und vorzugsweise ihr äußeres Ende mit der zugehörigen Seitenkante (19a) der Schränkbiegelasche (10a) die spitze Ecke (38) etwa rechtwinklig begrenzt, wobei die Schulterfläche (37), insbesondere unmittelbar, an die im stumpfen Winkel zu ihr liegende Keilfläche (21a) anschließt.

8. Befestigungsvorrichtung nach Anspruch 6 oder 7, dadurch gekennzeichnet, daß auf jeder Seite der Schränkbiegelasche (10a) ein Sicherungsglied (36) vorgesehen ist und daß vorzugsweise beide Sicherungsglieder (36) gleich ausgebildet sind.

9. Befestigungsvorrichtung nach einem der vorhergehenden Ansprüche, dadurch gekennzeichnet, daß alle Stecklaschen (9a, 10a) im wesentlichen gleiche Querschnitte aufweisen, vorzugsweise gegenüber ihrer Dicke eine mehrfach größere Breite haben, wobei insbesondere die Stecklaschen (9a) der ersten Koordinatenrichtung schmaler und/oder zu ihren abgerundeten Enden (17a) in der Breite verjüngt sind.

10. Befestigungsvorrichtung nach einem der vorhergehenden Ansprüche, dadurch gekennzeichnet, daß die Stecköffnung (7) für die voreilende Stecklasche (9) rechteckig schlitzförmig, jedoch gegenüber der Dicke dieser Stecklasche (9) breiter, insbesondere mindestens etwa um das Maß breiter ist, um welches das verjüngte Ende der nacheilenden Stecklasche gegenüber der zugehörigen Stecköffnung (8) schmaler ist.

11. Befestigungsvorrichtung nach einem der vorhergehenden Ansprüche, dadurch gekennzeichnet, daß alle Stecklaschen (9,10) an einem Verbindungsflansch (3) und alle Stecköffnungen (7,8) an dem anderen Verbindungsflansch (2) vorgesehen sind.

12. Befestigungsvorrichtung nach einem der vorhergehenden Ansprüche, dadurch gekennzeichnet, daß wenigstens die Stecköffnungen (7) der ersten Koordinatenrichtung (Pfeil 13) in einer im wesentlichen ebenen Platte vorgesehen sind, die vorzugsweise die jeweilige Stecköffnung (8) der zweiten Koordinatenrichtung in der Bodenwand (26) einer napfförmigen Ausformung (25) aufweist.

13. Befestigungsvorrichtung nach einem der vorhergehenden Ansprüche, dadurch gekennzeichnet, daß die Stecköffnungen (8) für die Schränkbiegelaschen an der Schränkseite von gratartig vorstehenden Kanten (32) begrenzt sind, die vorzugsweise im wesentlichen über eine die übrige zugehörige Außenfläche des Verbindungsflansches (2) bedeckende Schicht (33) aus Emaille oder dgl. vorstehen.

14. Befestigungsvorrichtung nach einem der vorhergehenden Ansprüche, dadurch gekennzeichnet, daß alle Stecklaschen (9,10) einteilig miteinander ausgebildet, insbesondere durch Abwinkelungen des zugehörigen, vorzugsweise für die Anordnung am Leistungssteuergerät (5) oder dgl. vorgesehenen, Verbindungsflansches (3) gebildet sind.

15. Befestigungsvorrichtung nach einem der vorhergehenden Ansprüche, dadurch gekennzeichnet, daß die Verbindungsflansche (2,3) benachbart zu den Stecklaschen (9,10) und Stecköffnungen (7,8) aneinanderliegende Gegendruckflächen (34,35) aufweisen, die vorzugsweise bis an die hinteren Enden mindestens einer Gruppe von Stecklaschen (9) reichen.

16. Befestigungsvorrichtung nach einem der vorhergehenden Ansprüche, dadurch gekennzeichnet, daß die Schränkbiegelaschen (10a) wenigstens teilweise an einander gegenüberliegenden Außenbegrenzungen und/oder die Stecklaschen (9a) der ersten Koordinatenrichtung (Pfeil 13a) wenigstens teilweise innerhalb der Außenbegrenzungen des zugehörigen Verbindungsflansches (3a) liegen, der vorzugsweise seine Gegendruckfläche (35a) bildende Vorsprünge, wie Rippen (39,40), aufweist, von denen zwei mit ihren Enden gegen zwei nebeneinander liegende Schränkbiegelaschen (10a) gerichtet sind und eine weitere zwischen der diesen gegenüberliegenden Schränkbiegelasche (10a) und den Stecklaschen (9a) der ersten Koordinatenrichtung (Pfeil 13a) liegen.

17. Befestigungsvorrichtung nach einem der vorhergehenden Ansprüche, dadurch gekennzeichnet, daß die Verbindungsflansche (2,3) zentrale Durchgangsöffnungen (29,28) für eine Stellwelle (11) oder dgl. des Leistungssteuergerätes (5) aufweisen und daß vorzugsweise die Stecklaschen (9,10) bzw. die Stecköffnungen (7,8) etwa gleiche Radialabstände von diesen Durchgangsöffnungen (7,8) haben.

18. Befestigungsvorrichtung nach einem der vorhergehenden Ansprüche, gekennzeichnet durch am Verbindungsflansch (3) für das Leistungssteuergerät (5) oder dgl. vorgesehene Befestigungsglieder (30) für das Gehäuse des Leistungssteuergerätes (5) oder dgl., wobei die Befestigungsglieder (30) vorzugsweise deckungsgleich zu Gewindebohrungen (31) des Leistungssteuergerätes (5) oder dgl. liegende Durchgangsbohrungen in einer Flanschplatte (27) des Verbindungsflansches (3) und/oder Steckprofile (41) mit Biegelaschen (42) sind.

19. Befestigungsvorrichtung nach einem der vorhergehenden Ansprüche, dadurch gekennzeichnet, daß der Verbindungsflansch (2) des Elektrogerätes durch dessen Bedienungsblende gebildet ist und daß vorzugsweise die Stecklaschen (9,10) und die Stecköffnungen (7,8) verdeckt hinter einer Betätigungshandhabe (6) des Leistungssteuergerätes (5) oder dgl. vorgesehen sind.

**Claims**

1. Fixing device, particularly for fixing power control devices (5) or the like to electrical appliances, such as electric cookers (4), with two connecting flanges (2, 3) to be fixed to one another and having at least two spaced pairs of in each case one fitting clip (9, 10) freely projecting in the fitting direction (arrow 15) and a complimentary fitting opening (7, 8), at least one fitting clip (10) adapted to the associated fitting opening (8) being constructed as an offset bending clip, characterized in that in cross-section at right angles to the fitting direction (arrow 15) are provided at least two fitting clips (9, 10) in first and second coordinate directions (arrows 13, 14) approximately at right angles to one another, that at least one fitting clip (9) located in a first coordinate direction (arrow 13) is constructed in leading manner compared with all the fitting clips (10) of the second coordinate direction (arrow 14) and is therefore first to be in fitting engagement in the associated fitting opening (7), that with each leading fitting clip (9) is associated a wider fitting opening (7) in the second coordinate direction (arrow 14) and which in the first coordinate direction (arrow 13) is closely adapted thereto and that tampering guide edges (18) are associated with each leading fitting clip (9).

2. Fixing device according to claim 1, characterized in that with each coordinate direction (arrows 13a, 14a) are associated at least two fitting clips (9a, 10a) displaced with respect to one another particularly in the other coordinate direction (arrows 14a, 13a) and preferably two of three offset bending clips (10a) located at the corners of an imaginary triangle are juxtaposed roughly in the second coordinate direction (arrow 14a).

3. Fixing device according to claims 1 or 2, characterised in that fitting clips (9) of one coordinate direction (arrow 13) face one another on either side of the fitting clips (10) of the other coordinate direction (arrow I4) and that preferably all the fitting clips (9, 10) are arranged on a common pitch circle and/or are approximately uniformly distributed.

4. Fixing device according to one of the preceding claims, characterized in that all the fitting clips (9a, 10a) project substantially equally far in the fitting direction (arrow 15a) and are in particular roughly of the same length and that the fitting openings (7a) associated with the leading and in particular slightly longer fitting clips (9a) are displaced approximately by the lead quantity with respect to the other fitting openings (8a).

5. Fixing device according to one of the preceding claims, characterized in that the leading fitting clips (9) have a substantially constant width approximately over their fitting length and that preferably exclusively the trailing fitting clips (10) are provided as offset bending clips and in particular on their side edges (19) have cutouts (20) bounded by wedge surfaces (21) for engagement in the facing longer boundary edges (32) of the in each case associated fitting opening (8).

6. Fixing device according to one of the preceding claims, characterized in that the particular offset bending clip (10a) has at least one retaining member (36) for engagement in the side of the connecting flange (2a) provided with the fitting opening and associated with its end (22a) and which is preferably formed by a shoulder surface (37) and/or a sharp corner (38).

7. Fixing device according to claim 6, characterized in that the shoulder surface (37) which is much narrower than the thickness of connecting flange (2a, 3a) is roughly parallel and is in particular under a small angle opening towards the outer end with respect to the associated bearing surface (26a) of the other connecting flange (2a) and preferably its outer end with the associated side edge (19a) of the offset bending clip (10a) bounds in an approximately right-angled manner the pointed corner (38) and shoulder surface (37) is in particular directly connected to the wedge surface (21a) which is at an obtuse angle thereto.

8. Fixing device according to claims 6 or 7, characterised in that on each side of the offset bending clip (10a) is provided a retaining member (36) and that preferably both retaining members (36) are identically constructed.

9. Fixing device according to one of the preceding claims, characterized in that all the fitting clips (9a, 10a) essentially have the same cross-sections and preferably have a much greater width than thickness and in particular the fitting clips (9a) of the first coordinate direction are narrower and/or width-tapered towards their rounded ends (17a).

10. Fixing device according to one of the preceding claims, characterized in that the fitting opening (7) for the leading fitting clip (9) is rectangular in slot-like manner, but wider than the thickness of said fitting clip (9) and is in particular wider at least by the quantity by which the tapered end of the trailing fitting clip is narrower than the associated fitting opening (8).

11. Fixing device according to one of the preceding claims, characterized in that all the fitting clips (9, 10) are provided on one connecting flange (3) and all the fitting openings (7, 8) on the other connecting flange (2).

12. Fixing device according to one of the preceding claims, characterized in that at least the fitting openings (7) of the first coordinate direction (arrow 13) are provided in a substantially planar plate, which preferably has the particular fitting opening (8) of the second coordinate direction in the base wall (26) of a cup-shaped part (25).

13. Fixing device according to one of the preceding claims, characterized in that the fitting opening (8) for the offset bending clips is bounded on the offset side by rib-like projecting edges (32), which preferably project substantially over a layer (33) of enamel or the like covering the remaining associated outer surface of connecting flange (2).

14. Fixing device according to one of the preceding claims, characterized in that all the fitting clips (9, 10) are constructed in one piece with one another and are in particular formed by bending the associated connecting flange (3) preferably provided for placing on the power control device (5) or the like.

15. Fixing device according to one of the preceding claims, characterized in that the connecting flanges (2, 3) have engaging counterpressure surfaces (34, 35) adjacent to the fitting clips (9, 10) and fitting openings (7, 8) and said counterpressure faces preferably extend up to the rear ends of at least one group of fitting clips (9).

16. Fixing device according to one of the preceding claims, characterized in that the offset bending clips (10a) are at least partly located on facing outer boundaries and/or fitting clips (9a) of the first coordinate direction (arrow 13a) are at least partly located within the outer boundaries of the associated connecting flange (3a), which preferably has the projections, such as ribs (39, 40) forming its counterpressure surface (35a), whereof the ends of two are directed against two juxtaposed offset bending clips (10a) and another one is located between the offset bending clip (10a) facing the same and the fitting clips (9a) of the first coordinate direction (arrow 13a).

17. Fixing device according to one of the preceding claims, characterized in that the connecting flanges (2, 3) have central through-openings (29, 28) for a control shaft (11) or the like of the power control device (5) and that preferably the fitting clips (9, 10) or fitting openings (7, 8) have approximately identical radial spacings from said through-openings (7, 8).

18. Fixing device according to one of the preceding claims, characterized in that fixing members (30) for the casing of the power control device (5) or the like are provided on the connecting flange (3) for the power control device (5) or the like, the fixing members (30) are preferably through-bores in a flange plate (27) of connecting flange (3) and/or fitting profiles (41) with bending clips (42) provided congruently to tapholes (31) of the power control device (5) or the like.

19. Fixing device according to one of the preceding claims, characterized in that the connecting flange (2) of the electrical appliance is formed by its control panel and that preferably the fitting clips (9, 10) and fitting openings (7, 8) are concealed behind an operating handle (6) of the power control device (5) or the like.

**Revendications**

1. Dispositif de fixation, notamment pour fixer des appareils de commande de puissance (5) ou similaires sur des appareils électriques tels que des cuisinières électriques (4), avec deux brides de fixation (2,3) à fixer l'une à l'autre, qui présentent au moins deux paires situées à distance l'une de l'autre et constituées chacune d'une patte enfichable (9,10) dépassant librement dans le sens d'enfichage (flèche 15) et d'une ouverture d'enfichage complémentaire (7,8), au moins une patte d'enfichage (10), étroitement adaptée à l'ouverture d'enfichage associée (8), étant réalisée en forme de patte à croiser, caractérisé en ce que, vu en coupe transversale perpendiculairement au sens d'enfichage (flèche 15), des premières et deuxièmes directions de coordonnées (flèches 13,14) approximativement orthogonales sont associées à au moins deux pattes enfichables (9,10), en ce qu'au moins une patte enfichable (9) située dans la première direction de coordonnées (flèche 13) est réalisée devançant toutes les pattes enfichables (10) de la deuxième direction de coordonnées (flèche 14) et arrivant ainsi préaloblement en engagement d'enfichage avec l'ouverture d'enfichage associée (7), en ce qu'est associée à chaque patte enfichable devançante (9) une ouverture d'enfichage supplémentaire (7) qui lui fait face conformément à un jeu d'ajustement dans la deuxième direction de coordonnées (flèche 14) et qui lui est étroitement adaptée dans la première direction de coordonnées (flèche 13), et en ce que des arêtes directrices rétrécies (18) sont associées aux arêtes latérales de chaque patte enfichable devançante (9).

2. Dispositif de fixation selon la revendication 1, caractérisé en ce qu'à chaque direction de coordonnées (flèches 13a, 14a) sont associées au moins deux pattes enfichables (9a,10a) qui sont notamment mutuellement décalées dans l'autre direction de coordonnées (flèches 14a,13a) et, de préférence, parmi trois pattes à croiser (10a) se trouvant aux coins d'un triangle imaginaire, deux sont prévues approximativement juxtaposées dans la deuxième direction de coordonnées (flèche 14a).

3. Dispositif de fixation selon la revendication 1 ou 2, caractérisé en ce que des pattes enfichables (9) d'une direction de coordonnées (flèche 13) se font face de part et d'autre des pattes enfichables (10) de l'autre direction de coordonnées (flèche 14), et en ce que toutes les pattes enfichables (9,10) sont de préférence approximativement disposées et/ou approximativement uniformément réparties sur un cercle primitif de préférence commun.

4. Dispositif de fixation selon l'une des revendications précédentes, caractérisé en ce que toutes les pattes enfichables (9a,10a) dépassent sensiblement aussi loin dans le sens d'enfichage (flèche 15a) et sont notamment approximativement de la même longueur, et en ce que les ouvertures d'enfichage (7a), associées aux pattes enfichables devançantes (9a) qui sont notamment légèrement plus longues, sont décalées par rapport aux autres ouvertures d'enfichage (8a), dans leur sens d'enfichage, approximativement de la valeur de devancement.

5. Dispositif de fixation selon l'une des revendications précédentes, caractérisé en ce que les pattes enfichables devançantes (9) présentent une largeur sensiblement constante approximativement sur toute leur longueur d'enfichage, et en ce que, de préférence, seules les pattes enfichables situées en arrière (10) sont prévues sous forme de pattes à croiser et présentent, notamment sur leurs arêtes latérales (19), des découpures (20) qui sont délimitées par des faces biaisées (21) et qui sont destinées à s'engager dans les arêtes de délimitation plus longues en vis-à-vis (32) de l'ouverture d'enfichage respectivement associée (8).

6. Dispositif de fixation selon l'une des revendications précédentes, caractérisé en ce que chaque patte à croiser (10a) présente au moins un organe d'arrêt (36) pour l'engagement dans le côté, associé à son extrémité (22a), de la bride d'assemblage (2a) munie de l'ouverture d'enfichage, organe qui est de préférence constitué par une face en épaulement (37) et/ou par un coin saillant (38).

7. Dispositif de fixation selon la revendication 6, caractérisé en ce que la face en épaulement (37), qui est plus étroite et notamment nettement plus étroite que l'épaisseur de la bride d'assemblage (2a,3a), se trouve approximativement parallèle, et notamment sous un faible angle s'ouvrant vers l'extrémité extérieure, par rapport à la face d'application associée (26a) de l'autre bride d'assemblage (2a), et, de préférence, son extrémité extérieure délimite approximativement à angle droit le coin saillant (38) avec l'arête latérale associée (19a) de la patte à croiser (10a), la face en épaulement (37) se raccordant, notamment directement, à la face biaisée (21a) qui forme avec elle un angle obtus.

8. Dispositif de fixation selon la revendication 6 ou 7, caractérisé en ce qu'un organe d'arrêt (36) est prévu de chaque côté de la patte à croiser (10a) et en ce que les deux organes d'arrêt (36) sont, de préférence, identiquement configurés.

9. Dispositif de fixation selon l'une des revendications précédentes, caractérisé en ce que toutes les pattes enfichables (9a,10a) présentent des sections sensiblement identiques et possèdent de préférence une largeur plusieurs fois supérieure à leur épaisseur, les pattes enfichables (9a) de la première direction de coordonnées étant notamment plus étroites et/ou de largeur rétrécie en direction de leurs extrémités arrondies (17a).

10. Dispositif de fixation selon l'une des revendications précédentes, caractérisé en ce que l'ouverture d'enfichage (7) pour la patte enfichable devançante (9) se présente en forme de fente rectangulaire, mais cependant plus large que l'épaisseur de cette patte enfichable (9), notamment plus large au moins approximativement de la mesure dont l'extrémité rétrécie de la patte enfichable située en arrière est plus étroite que l'ouverture d'enfichage associée (8).

11. Dispositif de fixation selon l'une des revendications précédentes, caractérisé en ce que toutes les pattes enfichables (9,10) sont prévues sur une bride d'assemblage (3) et toutes les ouvertures d'enfichage (7,8) sont prévues sur l'autre bride d'assemblage (2).

12. Dispositif de fixation selon l'une des revendications précédentes, caractérisé en ce qu'au moins les ouvertures d'enfichage (7) de la première direction de coordonnées (flèche 13) sont prévues dans une plaque sensiblement plane, qui présente de préférence l'ouverture d'enfichage respective (8) de la deuxième direction de coordonnées dans la paroi de fond (26) d'un évidement en forme de coupelle (25).

13. Dispositif de fixation selon l'une des revendications précédentes, caractérisé en ce que les ouvertures d'enfichage (8) pour les pattes à croiser sont délimitées, du côté du croisement, par des arêtes saillantes (32) du genre bavures qui, de préférence, dépassent sensiblement au-dessus d'une couche (33) en émail ou similaire qui recouvre le reste de la surface extérieure correspondante de la bride d'assemblage (2).

14. Dispositif de fixation selon l'une des revendications précédentes, caractérisé en ce que toutes les pattes enfichables (9,10) sont solidaires, notamment en étant formées par des coudages de la bride d'assemblage correspondante (3), de préférence destinée à être disposée sur l'appareil de commande de puissance (5) ou similaire.

15. Dispositif de fixation selon l'une des revendications précédentes, caractérisé en ce que les brides d'assemblage (2,3) présentent, au voisinage des pattes enfichables (9,10) et des ouvertures d'enfichage (7,8), des faces de contre-pression (34,35) appliquées l'une contre l'autre, qui s'étendent de préférence jusqu'aux extrémités arrière d'au moins un groupe de pattes enfichables (9).

16. Dispositif de fixation selon l'une des revendications précédentes, caractérisé en ce que les pattes à croiser (10a) se trouvent au moins partiellement sur des délimitations extérieures en vis-à-vis de la bride d'assemblage associée (3a), et/ou les pattes enfichcibles (9a) de la première direction de coordonnées (flèche 13a) se trouvent au moins partiellement à l'intérieur des délimitations extérieures de la bride d'assemblage associée (3a), laquelle présente, de préférence, des saillies telles que des nervures (39,40), qui constituent de préférence sa face de contre-pression (35a) et dont deux ont leurs extrémités orientées à l'encontre de deux pattes à croiser (10a) juxtaposées, et dont une autre se trouve entre la patte à croiser (10a) qui fait face aux précédentes et les pattes enfichables (9a) de la première direction de coordonnées (flèche 13a).

17. Dispositif de fixation selon l'une des revendications précédentes, caractérisé en ce que les brides d'assemblage (2,3) présentent des ouvertures traversantes centrales (29,28) pour un arbre de commande (11) ou similaire de l'appareil de commande de puissance (5), et en ce que, de préférence, les pattes enfichables (9,10) ou les ouvertures d'enfichage (7,8) présentent des distances radiales approximativement identiques par rapport à ces ouvertures traversantes (29,28).

18. Dispositif de fixation selon l'une des revendications précédentes, caractérisé par des organes de fixation (30) pour le boîtier de l'appareil de commande de puissance (5) ou similaire, qui sont prévus sur la bride d'assemblage (3) pour cet appareil (5), les organes de fixation (30) étant des alésages traversants qui sont pratiqués dans une plaque de bridage (27) de la bride d'assemblage (3) et/ou dans des profilés (41) munis de pattes à plier (42), et qui sont de préférence coïncidents avec des perçages filetés (31) de l'appareil de commande de puissance (5) ou similaire.

19. Dispositif de fixation selon l'une des revendications précédentes, caractérisé en ce que la bride d'assemblage (2) de l'appareil électrique est constituée par le panneau de commande de cet appareil électrique, et en ce que les pattes enfichables (9,10) et les ouvertures d'enfichage (7,8) sont de préférence prévues cachées derrière une manette d'actionnement (6) de l'appareil de commande de puissance (5) ou similaire.

Fig.2

Fig.1

Fig.5

Fig.3

Fig.4

*Fig. 6*

*Fig.7*

*Fig.8*

16

Fig.9

Fig.10

Fig.11